# EUROPEAN PATENT APPLICATION

(11) **EP 2 275 460 A1**
(43) Date of publication of application: **19.01.2011**
(21) Application number: 10251052.6
(22) Date of filing: 08.06.2010
(51) Int. Cl.: C08F 220/12, B29C 45/00, C08K 5/05, C08L 33/12, G02B 6/00, G02F 1/13357

(54) **New methacrylic resin composition**

(30) Priority: 09.06.2009 JP 2009138570
(71) Applicant: Sumitomo Chemical Company, Limited, Tokyo 104-8260 (JP)
(72) Inventor: Wake, Takao, Saijo-shi Ehime (JP); Yamazaki, Kazuhiro, Saijo-shi Ehime (JP)
(74) Representative: Duckworth, Timothy John

(57) **Abstract**

The present invention is directed to provide a methacyrlic resin composition which can suppress appearance of a silver streak(s) and can be molded at a thickness not larger than 1 mm with a good molding property (mold filling property) and a good mold releasing property.

A methacrylic resin composition of the present invention is used for preparing a light guide plate having a thickness not large than 1 mm, and comprises a copolymer polymerized from monomeric components comprising methyl methacrylate and acrylic acid ester wherein a content ratio of methyl methacrylate is at least 60% by weight and a content ratio of acrylic acid ester is at most 12 % by weight, and has a reduced viscosity of 0.47-0.55 dL/g at 25°C measured as a solution at a concentration of 0.5 g/50 mL in chloroform, and MFR of at least 18 g/10 min at 230° measured under a load of 37.3 N.

## Description

### BACKGROUND OF THE INVENTION

### Field of the Invention

The present invention relates to a methacrylic resin composition which is useful as a molding material for preparing a thin thickness light guide plate having a thickness not larger than 1 mm by, for example, injection molding, and to use and applications thereof.

### Description of Related Art

Since methacrylic resins have a good transparency, they have been used conventionally as a molding material for a light guide plate which is, for example, used for a component of a back light unit in various types of liquid crystal displays. Such a light guide plate is generally prepared by injection molding. Regarding a molding material for preparing an optical element such as a light guide plate by injection molding as above, various methacrylic resin compositions have been reported hitherto (see JP 08-269291 A, JP 08-302145 A, JP 08-253650 A, JP 08-280746 A, and JP 2006-298966 A).

### SUMMARY OF THE INVENTION

### Technical Problem

However, in accordance with the recent movement to thinner liquid crystal displays for laptop personal computers, monitors, and so on, a thinner light guide plate used therein is also demanded. More specifically, a thin thickness light guide plate having a thickness, for example, not larger than 1 mm is required. However, when a conventional methacrylic resin composition as above is subjected to injection molding with the use of a mold to give a thickness not larger than 1 mm, there arise problems such as the fact that the resin composition can not fill whole of the mold well; that after filling of the mold, the molded article is hardly released on being taken out from the mold, and a crack(s) or the like occurs; or that a silver streak(s) appears in the molded article. Therefore, a good molded article could not be obtained.

Thus, the purpose of the present invention is to provide a methacrylic resin composition which can suppress appearance of a silver streak(s) and can be thin thickness molded at a thickness not larger than 1 mm with a good molding property (mold filling property) and a good mold releasing property, as well as use and applications thereof.

### Solution to Problem

In order to solve the above problems, the inventors have considered earnestly. As a result, it has been found that a resin composition which comprises a copolymer polymerized from monomeric components having a certain composition and necessarily comprising methyl methacrylate and acrylic acid ester (in other words, acrylate ester) and has a reduced viscosity and MFR respectively in certain ranges can suppress appearance of a silver streak(s) and can be molded by injection molding with good molding and mold releasing properties even when its thickness is not larger than 1 mm, and thereby the present invention has been completed.

That is, the present invention has the following constitutions.
(1) A methacrylic resin composition for a light guide plate having a thickness not larger than 1 mm, **characterized in that** the methacrylic resin composition comprises a copolymer polymerized from monomeric components comprising methyl methacrylate and acrylic acid ester wherein a content ratio of methyl methacrylate is at least 60% by weight and a content ratio of acrylic acid ester is at most 12% by weight; and a reduced viscosity is 0.47-0.55 dL/g at 25°C measured as a solution at a concentration of 0.5 g/50 mL in chloroform, and MFR is at least 18 g/10 min at 230°C measured under a load of 37.3 N.
(2) The methacrylic resin composition according to the above (1), wherein the monomeric components comprise at least 60% by weight of methyl methacrylate, 6-12% by weight of acrylic acid ester, and 0.02-0.3% by weight of polyfunctional monomer having at least two radical-polymerizable double bonds.
(3) The methacrylic resin composition according to the above (1) or (2), wherein polymerization of the monomeric components is conducted by bulk polymerization.
(4) The methacrylic resin composition according to any one of the above (1) to (3), which comprises 0.01-1.0% by weight of a mold release agent with respect to a total amount of the methacrylic resin composition.
(5) The methacrylic resin composition according to any one of the above (1) to (4), which comprises a thermal stabilizing agent.
(6) The methacrylic resin composition according to any one of the above (1) to (5), which is to be subjected to injection molding.
(7) Use of the methacrylic resin composition according to any one of the above (1) to (6) in injection molding to obtain a light guide plate having a thickness not larger than 1 mm.
(8) A light guide plate which is obtained from the methacrylic resin composition according to any one of the above (1) to (6) by injection molding to have a thickness not larger than 1 mm.

### Advantageous Effects of Invention

According to the methacrylic resin composition of the present invention, following effects are attained: appearance of a silver streak(s) can be suppressed; thin thickness molding can be realized at a thickness not larger than 1 mm with good molding and mold releasing properties; and thereby a thin thickness light guide plate having a thickness not larger than 1 mm can be prepared readily.

### DETAILED DESCRIPTION OF THE EMBODIMENTS

### (Methacrylic resin composition)

A methacrylic resin composition of the present invention comprises a copolymer polymerized from monomeric components comprising methyl methacrylate and acrylic acid ester wherein a content ratio of methyl methacrylate is at least 60% by weight and a content ratio of acrylic acid ester is at most 12% by weight. More specifically, the monomeric components for forming the above copolymer necessarily comprise methyl methacrylate (a) and acrylic acid ester (b), and additionally may comprise a monomer (c) which is copolymerizable with methyl methacrylate or acrylic acid ester.

In the above-described monomeric components, a content ratio of methyl methacrylate (a) is at least 60% by weight, preferably at least 80% by weight, and more preferably 87.7-93.98% by weight. Also in the monomeric components, a content ratio of acrylic acid ester (b) is at most 12% by weight, preferably 0.5-12% by weight, and more preferably 6-12% by weight. If the content ratio of acrylic acid ester (b) exceeds 12% by weight, although a molding property (mold filling property) is improved, but in some cases the obtained molded article (light guide plate) may not have enough heat resistance to maintain its shape.

As the above-described acrylic acid ester (b), acrylic acid ester which can reduce a glass transition temperature of the resultant copolymer is mentioned, exemplarily. More specifically, examples thereof are methyl acrylate, ethyl acrylate, propyl acrylate, n-butyl acrylate, sec-butyl acrylate, tert-butyl acrylate, cyclohexyl acrylate, benzyl acrylate, 2-ethylhexyl acrylate, 2-hydroxyethyl acrylate, cyclopentadiene acrylate, and so on. Among them, methyl acrylate and ethyl acrylate are preferred. As the above-described acrylic acid ester (b), one kind or more than one kind thereof may be used.

As to the above-described monomer (c) which is copolymerizable with methyl methacrylate or acrylic acid ester, there are no specific limitations, but monofunctional monomer having one radical-polymerizable double bond and polyfunctional monomer having at least two radical-polymerizable double bonds are mentioned, exemplarily. More specifically, examples of monofunctional monomer having one radical-polymerizable double bond are methacrylic acid ester such as ethyl methacrylate, propyl methacrylate, n-butyl methacrylate, sec-butyl methacrylate, tert-butyl methacrylate, 2-ethylhexyl methacrylate, cyclohexyl methacrylate, benzyl methacrylate, cyclopentadiene methacrylate; unsaturated carboxylic acid or acid anhydride thereof such as acrylic acid, methacrylic acid, maleic acid, itaconic acid, maleic acid anhydride, itaconic acid anhydride; nitrogen-containing monomer such as acrylamide, methacrylamide, acrylonitrile, methacrylonitrile; styrene based monomer such as styrene, α-methylstyrene; and so on. Examples of polyfunctional monomer having at least two radical-polymerizable double bonds are unsaturated carboxylic acid diester of glycol such as ethylene glycol dimethacrylate, butanediol dimethacrylate; alkenyl ester of unsaturated carboxylic acid such as allyl acrylate, allyl methacrylate, allyl cinnamate; polyalkenyl ester of polybasic acid such as diallyl phthalate, diallyl maleate, triallyl cyanaurate, triallyl isocyanurate; unsaturated carboxylic acid ester of polyalcohol such as trimethylolpropane triacrylate;' divinylbenzene; and so on. As the above-described monomer (c), one kind or more than one kind thereof may be used.

The monomeric components preferably comprise a polyfunctional monomer having at least two radical-polymerizable double bonds which is described in the above regarding the monomer (c). By incorporating such polyfunctional monomer therein, MFR of the resin composition can be increased. When the monomeric components comprise the polyfunctional monomer, a content ratio of the polyfunctional monomer in the monomeric components is generally 0.02-0.3% by weight, and preferably 0.05-0.1% by weight. If the content ratio of the polyfunctional monomer is too small, MFR may not be increased sufficiently. On the other hand, if the content ratio of the polyfunctional monomer is too high, a mechanical strength of the obtained molded article (light guide plate) may be lowered.

In a preferred embodiment, the monomeric components comprise at least 60% by weight of methyl methacrylate, 6-12% by weight of acrylic acid ester, and 0.02-0.3% by weight of polyfunctional monomer having at least two radical-polymerizable double bonds. In a more preferred embodiment, the monomeric components consist of 87.7-93.98% by weight of methyl methacrylate, 6-12% by weight of acrylic acid ester, and 0.02-0.3% by weight of polyfunctional monomer having at least two radical-polymerizable double bonds.

A polymerization process for copolymerizing the monomeric components is not limited, and any of polymerization processes known in the art, for example, suspension polymerization, solution polymerization, bulk polymerization, and so on can be used. Among them, bulk polymerization is preferred. Bulk polymerization can be conducted by, for example, continuously supplying monomeric components, a polymerization initiator and so on into a reactor while continuously taking out therefrom a partially polymerized material resulted after a prescribed residence time in the reactor, so that the copolymer can be obtained with a high productivity.

The polymerization initiator used for copolymerizing the monomeric components is not limited, and any of radical polymerization initiators known in the art, for example, an azo compound such as azobisisobutyronitrile, a peroxide such as 1,1-di(t-butylperoxy)cyclohexane, and so on can be used. As the polymerization initiator, one kind or more than one kind thereof may be used.

For copolymerizing the monomeric components, a chain transfer agent may be used, if necessary. A chain transfer agent is not limited, but preferable examples thereof are mercaptans such as n-butylmercaptan, n-octylmercaptan, n-dodecylmercaptan, 2-ethylhexyltioglycolate, and so on. As the chain transfer agent, one kind or more than one kind thereof may be used.

A polymerization temperature for copolymerizing the monomeric components is adjusted adequately depending on, for example, a kind and an amount of the radical polymerization initiator which is used, but generally 100°-200°C, and preferably 120°-180°C. If the polymerization temperature is too high, since syndiotacticity of the obtained copolymer is lowered, the obtained molded article (light guide plate) may not have enough heat resistance to maintain its shape.

The methacrylic resin composition of the present invention preferably comprises, together with the above-described copolymer, 0.01-1.0% by weight of a mold release agent with respect to a total amount of the methacrylic resin composition. More preferably, the content ratio of the mold release agent is 0.05-0.5% by weight with respect to the total amount of the methacrylic resin composition. This contributes to improvement in a mold releasing property when the obtained molded article is released from a mold.

As to the above-described mold release agent, there are no limitations, but examples thereof are ester of higher fatty acid, higher fatty alcohol, higher fatty acid, higher fatty acid amide, metal salt of higher fatty acid, and so on. As the mold release agent, one kind or more than one kind thereof may be used.

As the above-described ester of higher fatty acid, more specifically, examples are saturated fatty acid alkyl ester such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, octyl behenate; unsaturated fatty acid alkyl ester such as methyl oleate, ethyl oleate, propyl oleate, butyl oleate, octyl oleate, methyl linoleate, ethyl linoleate, propyl linoleate, butyl linoleate, octyl linoleate; saturated fatty acid glyceride such as lauric monoglyceride, lauric diglyceride, lauric triglyceride, palmitic monoglyceride, palmitic diglyceride, palmitic triglyceride, stearic monoglyceride, stearic diglyceride, stearic triglyceride, behenic monoglyceride, behenic diglyceride, behenic triglyceride; unsaturated fatty acid glyceride such as oleic monoglyceride, oleic diglyceride, oleic triglyceride, linolic monoglyceride, linolic diglyceride, linolic triglyceride; and so on. Among them, methyl stearate, ethyl stearate, butyl stearate, octyl stearate, stearic monoglyceride, stearic diglyceride, stearic triglyceride, and the like are preferred.

As the above-described higher fatty alcohol, more specifically, examples are saturated fatty (or aliphatic) alcohol such as lauryl alcohol, palmityl alcohol, stearyl alcohol, isostearyl alcohol, behenyl alcohol, myristyl alcohol, cetyl alcohol; unsaturated fatty (or aliphatic) alcohol such as oleyl alcohol, linolyl alcohol; and so on. Among them, stearyl alcohol is preferred.

As the above-described higher fatty acid, more specifically, examples are saturated fatty acid such as caproic acid, caprylic acid, capric acid, lauric acid, myristic acid, palmitic acid, stearic acid, arachidic acid, behenic acid, lignoceric acid, 12-hydroxyoctadecanoic acid; unsaturated fatty acid such as palmitoleic acid, oleic acid, linoleic acid, linolenic acid, cetoleic acid, erucic acid, ricinoleic acid; and so on.

As the above-described higher fatty acid amide, more specifically, examples are saturated fatty acid amide such as lauric acid amide, palmitic acid amide, stearic acid amide, behenic acid amide; unsaturated fatty acid amide such as oleic acid amide, linoleic acid amide, erucic acid amide; amides such as ethylene-bis-lauric acid amide, ethylene-bis-palmitic acid amide, ethylene-bis-stearic acid amide, N-oleylstearamide; and so on. Among them, stearic acid amide and ethylene-bis-stearic acid amide are preferred.

As the above-described metal salt of higher fatty acid, examples are sodium salt, potassium salt, calcium salt and barium salt of the above-described higher fatty acid, and so on.

The methacrylic resin composition of the present invention preferably comprises, together with the above-described copolymer, a thermal stabilizing agent for suppressing thermal decomposition of the copolymer. More preferably, the content ratio of the thermal stabilizing agent is 1-2000 ppm by weight with respect to the total amount of the methacrylic resin composition. When the methacrylic resin composition of the present invention is subjected to injection molding so as to mold it into a thin thickness light guide plate as desired, a molding temperature is set at a higher temperature for the purpose of increasing a molding efficiency in some cases, and addition of the thermal stabilizing agent in these cases contributes to such effect.

As to the thermal stabilizing agent, there are no specific limitations, but a phosphorus thermal stabilizing agent and an organic disulfide compound are mentioned, exemplarily. Among them, the organic disulfide compound is preferred. As the thermal stabilizing agent, one kind or more than one kind thereof may be used.

As the above-described phosphorus thermal stabilizing agent, examples are tris(2,4-di-t-butylphenyl)phosphite, 2-[[2,4,8,10-tetrakis(1,1-dimethylethyl)dibenzo [d,f][1,3,2]dioxaphosphepine-6-yl]oxy]-N,N-bis [2-[[2,4,8,10-tetrakis(1,1-dimethylethyl)dibenzo [d,f][1,3,2]dioxaphosphepine-6-yl]oxy]-ethyl]ethanamine, diphenyl tridecyl phosphite, triphenyl phosphite, 2,2-methylenebis(4,6-di-tert-butylphenyl)octylphosphite, bis(2,6-di-tert-butyl-4-methylphenyl)pentaerythritol diphosphite, and so on. Among them, 2,2-methylenebis(4,6-di-tert-butylphenyl)octylphosphite is preferred.

As the above-described organic disulfide compound, examples are dimethyl disulfide, diethyl disulfide, di-n-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dodecyl disulfide, di-tert-dodecyl disulfide, and so on. Among them, di-tert-alkyl disulfide is preferred, and di-tert-dodecyl disulfide is more preferred.

In addition to the copolymer, the mold release agent and the thermal stabilizing agent described above, the methacrylic resin composition of the present invention may comprise, if necessary, various additives such as an ultraviolet absorbing agent, a light diffusing agent, an antioxidizing agent, an antistatic agent, and so on as long as the present invention does not lose its effects.

When the methacrylic resin composition of the present invention comprises the mold release agent, the thermal stabilizing agent or the various additives (which are hereinafter collectively referred to as "additives"), these additives are incorporated therein by a method, for example, a method (I) wherein the copolymer obtained from polymerization of the monomeric components and the additives are mixed with each other while being heated in a single screw extruder or a twin screw extruder, i.e. melt mixing; a method (II) wherein the monomeric components and the additives are mixed with each other, and the resultant mixture is subjected to a polymerization reaction to obtain the copolymer integrally with the additives; a method (III) wherein the additives adhere to a surface of pellets or beads made of the copolymer described in the above (I), and the additives are mixed with the copolymer at the same time as molding.

The methacrylic resin composition of the present invention has a reduced viscosity of 0.47-0.55 dL/g at 25°C when it is measured as a solution at a concentration of 0.5 g/50 mL in chloroform. The reduced viscosity is preferably 0.47-0.52 dL/g, and more preferably 0.47-0.50 dL/g. If the reduced viscosity is less than 0.47 dL/g, although a molding property (mold filling property) is improved, a mold releasing property becomes poor, so that a crack(s) occurs readily during a molded article is released from a mold. On the other hand, the reduced viscosity is more than 0.55 dL/g, a molding property (mold filling property) becomes poor, so that the molding can not be conducted at a thickness not larger than 1 mm. The reduced viscosity can be within the above range by adjusting an amount of the chain transfer agent which is used for polymerization of the monomeric components. More specifically, the reduced viscosity can be decreased by increasing the amount of the chain transfer agent.

The methacrylic resin composition of the present invention has MFR of at least 18 g/10 min at 230°C when it is measured under a load of 37.3 N. The MFR is preferably 18-35 g/10 min, and more preferably 18-30 g/10 min. If the MFR is less than 18 g/ 10 min, a molding property (mold filling property) becomes poor, so that the molding can not be conducted at a thickness not larger than 1 mm. Since MFR depends on a reduced viscosity, a composition of the monomeric components (content ratios of acrylic acid ester and polyfunctional monomer), and a polymerization temperature for polymerizing the monomeric components, the MFR can be within the above range by, for example, adjusting the reduced viscosity and the composition of the monomeric components as a certain polymerization temperature. More specifically, the MFR can be increased at a certain polymerization temperature by decreasing the reduced viscosity, or by increasing the content ratio of acrylic acid ester in the monomeric components, or by increasing the content ratio of polyfunctional monomer in the monomeric components.

The methacrylic resin composition of the present invention hereinbefore described is useful as a molding material for molding a thin thickness light guide plate at a thickness not larger than 1 mm, and preferably used inter alia as a molding material subjected to injection molding.

The thin thickness light guide plate of the present invention is obtained by subjecting the methacrylic resin composition of the present invention described above to injection molding to have a thickness not larger than 1 mm. In more detail, the thin thickness light guide plate of the present invention is obtained by using the methacrylic resin composition of the present invention as a molding material, filling a mold having a certain thickness with the molding material in a melt state (by injection), cooling it, and then releasing a molded article from the mold. More specifically, the thin thickness light guide plate can be prepared, for example, as follows: the methacrylic resin composition of the present invention is supplied from a hopper, a screw is set back while being revolved, the resin composition is measured into a cylinder, the resin composition is melted, a pressure is applied to the melted resin composition to fill a mold, it is retained for a certain time period until the mold cools down sufficiently, and then the mold is opened to release the molded article. As to various conditions for preparing the thin thickness light guide plate of the present invention (e.g. a melt temperature of a molding material, a mold temperature on injecting the mold material into the mold, a pressure at which a pressure is kept after the resin composition fills the mold, and so on), they can be set adequately and are not specifically limited.

### Examples

The present invention is explained in more detail by examples below, although the present invention is not limited thereto.

Measurement of each property of the resin composition obtained in examples and evaluation of the resin composition were conducted as follows.

### <Reduced viscosity>

Pursuant to ISO 1628-6, 0.5 g of each sample was dissolved into 50 mL of chloroform, and its viscosity was measured at 25°C with the use of Ostwald viscometer.

### <MFR>

Pursuant to JIS-K7210, measurement was conducted at 230°C under a load of 37.3 N, and the measured value was converted into a value per 10 min.

### <Tensile strength>

Pursuant to JIS-K7162, a 1A sample was prepared by injection molding, and subjected to a test with a velocity of 5 mm/min to calculate a tensile fracture stress.

### <Evaluation on thin-thickness molding at a thickness not larger than 1 mm>

A flat plate having a width of 12 inches and a thickness of 0.6 mm was prepared at a molding temperature of 300°C and a mold temperature of 70°C by using an electric injection molding machine (J450ELIII-890H, JSW The Japan Steel Works, LTD.).

Then, evaluation was made as follows.
A: Molding was conducted at a state where the mold was fully packed with a molding material, no silver streak appeared, and no crack occurred during release from the mold.
B: Molding was conducted at a state where the mold was fully packed with a molding material, and no silver streak appeared, but a crack(s) occurred during release from the mold.
C: Molding could not be conducted at a molding temperature of 300°C, or even though the molding could be conducted, a silver streak(s) appeared.

### (Example 1)

A polymerization reactor equipped with a stirrer was supplied respectively and continuously with a mixture (monomeric components) of 93 parts by weight of methyl methacrylate (hereinafter abbreviated as "MMA"), 7 parts by weight of methyl acrylate (hereinafter abbreviated as "MA"), and 0.1 part by weight of ethylene glycol dimethacrylate (hereinafter abbreviated as "EGDM"); 0.02 part by weight of 1,1-di(t-butylperoxy)cyclohexane as a polymerization initiator; 0.40 part by weight of n-octylmercaptan as a chain transfer agent; di-tert-dodecyl disulfide as a thermal stabilizing agent at an amount which corresponded to about 10 ppm by weight with respect to the total amount of the resin composition finally obtained. The polymerization reaction was conducted at 175°C with an average residence time of 40 min. Next, a reaction fluid (a partially copolymerized material) which was taken out from the polymerization reactor was transferred to a devolatizing extruder. While unreacted monomeric components were recovered by vaporization, stearic monoglyceride at an amount which corresponded to 0.1% by weight (0.1 part by weight) with respect to the total amount of the resin composition finally obtained, and methyl stearate at an amount which corresponded to 0.03% by weight (0.03 part by weight) with respect to the total amount of the resin composition finally obtained were added thereto as mold release agents. After the material was sufficiently mixed, it was shaped so that the methacrylic resin composition in the form of pellets was obtained.

A reduced viscosity and MFR of the obtained methacrylic resin composition are shown in Table 1. Using this resin composition, a tensile strength and thin thickness molding were evaluated, and the results are also shown in Table 1.

### (Example 2)

The methacrylic resin composition in the form of pellets was obtained according to similar procedures to Example 1, except for that an amount of n-octylmercaptan used as a chain transfer agent in Example 1 was changed from 0.40 part by weight to 0.35 part by weight.

A reduced viscosity and MFR of the obtained methacrylic resin composition are shown in Table 1. Using this resin composition, a tensile strength and thin thickness molding were evaluated, and the results are also shown in Table 1.

### (Comparative Example 1)

The methacrylic resin composition in the form of pellets was obtained according to similar procedures to Example 1, except for that an amount of MMA in Example 1 was changed to 96 parts by weight; an amount of MA was changed to 4 parts by weight; an amount of 1,1-di(t-butylperoxy)cyclohexane used as a polymerization initiator was changed from 0.02 part by weight to 0.03 part by weight; and an amount of n-octylmercaptan used as a chain transfer agent was changed from 0.40 part by weight to 0.55 part by weight.

A reduced viscosity and MFR of the obtained methacrylic resin composition are shown in Table 1. Using this resin composition, a tensile strength and thin thickness molding were evaluated, and the results are also shown in Table 1.

### (Comparative Example 2)

The methacrylic resin composition in the form of pellets was obtained according to similar procedures to Example 1, except for that an amount of MMA in Example 1 was changed to 96 parts by weight: an amount of MA was changed to 4 parts by weight; and an amount of n-octylmercaptan used as a chain transfer agent was changed from 0.40 part by weight to 0.46 part by weight.

A reduced viscosity and MFR of the obtained methacrylic resin composition are shown in Table 1. Using this resin composition, a tensile strength and thin thickness molding were evaluated, and the results are also shown in Table 1.

### (Comparative Example 3)

The methacrylic resin composition in the form of pellets was obtained according to similar procedures to Example 1, except for that an amount of MMA in Example 1 was changed to 95 parts by weight; and an amount of MA was changed to 5 parts by weight.

A reduced viscosity and MFR of the obtained methacrylic resin composition are shown in Table 1. Using this resin composition, a tensile strength and thin thickness molding were evaluated, and the results are also shown in Table 1.

### (Comparative Example 4)

The methacrylic resin composition in the form of pellets was obtained according to similar procedures to Example 1, except for that an amount of MMA in Example 1 was changed to 95 parts by weight; an amount of MA was changed to 5 parts by weight; and an amount of n-octylmercaptan used as a chain transfer agent was changed from 0.40 part by weight to 0.30 part by weight.

A reduced viscosity and MFR of the obtained methacrylic resin composition are shown in Table 1. Using this resin composition, a tensile strength and thin thickness molding were evaluated, and the results are also shown in Table 1.

**Table 1**

| | | | Example 1 | Example 2 | Comparative Example 1 | Comparative Example 2 | Comparative Example 3 | Comparative Example 4 |
|---|---|---|---|---|---|---|---|---|
| Monomeric components | MMA | parts by weight | 93 | 93 | 96 | 96 | 95 | 95 |
| | MA | parts by weight | 7 | 7 | 4 | 4 | 5 | 5 |
| | GEM | parts by weight | 0.1 | 0.1 | 0.1 | 0.1 | 0.1 | 0.1 |
| Polymerization initiator | | parts by weight | 0.02 | 0.02 | 0.03 | 0.02 | 0.02 | 0.02 |
| Chain transfer agent | | parts by weight | 0.40 | 0.35 | 0.55 | 0.46 | 0.40 | 0.30 |
| Reduced viscosity | | dL/g | 0.47 | 0.50 | 0.37 | 0.41 | 0.45 | 0.56 |
| MFR | | g/10 min | 25 | 20 | 47 | 30 | 20 | 10 |
| Tensile strength | | MPa | 45 | 63 | 11 | 11 | 25 | 65 |
| Evaluation on thin thickness molding | | - | A | A | B | B | B | C |

The present application claims priority to Japanese Patent Application No. 2009-138570 filed on June 9, 2009, entitled "METHACRYLIC RESIN COMPOSITION." The contents of that application are incorporated herein by the reference thereto in their entirety.

## Claims

1. A methacrylic resin composition suitable for a light guide plate having a thickness not larger than 1 mm, which resin composition comprises a copolymer polymerizable from monomeric components comprising methyl methacrylate and acrylic acid ester wherein the content of methyl methacrylate is at least 60% by weight and the content of acrylic acid ester is at most 12% by weight; and
having a reduced viscosity of 0.47-0.55 dL/g at 25°C measured as a solution at a concentration of 0.5 g/50 mL in chloroform, and MFR of at least 18 g/10 min at 230°C measured under a load of 37.3 N.

2. The resin composition according to claim 1, wherein the monomeric components comprise at least 60% by weight of methyl methacrylate, 6-12% by weight of acrylic acid ester, and 0.02-0.3% by weight of polyfunctional monomer having at least two radical-polymerizable double bonds.

3. The resin composition according to claim 1 or 2, wherein polymerization of the monomeric components is conducted by bulk polymerization.

4. The resin composition according to any one of claims 1 to 3, which comprises 0.01-1.0% by weight of a mold release agent with respect to the total amount of the methacrylic resin composition.

5. The resin composition according to any one of claims 1 to 4, which comprises a thermal stabilizing agent.

6. The resin composition according to any one of claims 1 to 5, which is suitable for injection molding.

7. Use of the methacrylic resin composition according to any one of claims 1 to 6 in injection molding to obtain a light guide plate having a thickness not larger than 1 mm.

8. A light guide plate having a thickness not larger than 1 mm which comprises an injection molded resin composition, wherein the resin composition is a methacrylic resin composition according to any one of claims 1 to 6.
